# EUROPEAN PATENT SPECIFICATION

(11) **EP 1 113 201 B1**
(45) Date of publication and mention of the grant of the patent: **31.05.2006**
(21) Application number: 00311616.7
(22) Date of filing: 22.12.2000
(51) Int. Cl.: F16J 15/32

(54) **Brush seal and segment for rotary machines such as turbines**
Bürstendichtung und Segment für Rotationsmaschinen wie Gasturbinen
Joint à brosses et segment pour machines tournantes tels que des turbines

(30) Priority: 27.12.1999 US 472915
(43) Date of publication of application: 04.07.2001
(73) Proprietor: GENERAL ELECTRIC COMPANY, Schenectady, NY 12345 (US)
(72) Inventor: Dinc, Osman Saim, Troy, New York 12180 (US); Aksit, Mahmut Faruk, Troy, New York 12180 (US); Anstead, Duane Howard, Hamilton, Ohio 45011 (US); Battle, Michael Eugene, Forest Park, Ohio 45240 (US)
(74) Representative: Pedder, James Cuthbert

(56) References cited:
- EP-A- 0 617 216
- US-A- 5 884 918

## Description

The present invention generally relates to rotary machines, such as steam and gas turbines, and, more particularly, to a brush seal for a rotary machine such as a turbine.

Rotary machines, such as steam and gas turbines, used for power generation and mechanical drive applications are generally large machines having multiple turbine stages. In turbines, high pressure fluid flowing through the turbine stages must pass through a series of stationary and rotary components, and seals typically are used between the stationary and rotating components to minimize leakage of the fluid. The efficiency of the turbine is dependent on the ability of the seals to prevent fluid leakage.

Commonly, a brush seal is used in combination with a labyrinth seal to control fluid leakage in turbines. The brush seal has bristles that can flex and thus accommodate relative radial movement between the stationary and rotating components of the turbine and also conform to surface nonuniformities. One example of a labyrinth and brush seal combination is disclosed in U.S. Pat. No. 5,749,584 to Skinner et al. assigned to General Electric Company, the assignee of the present invention.

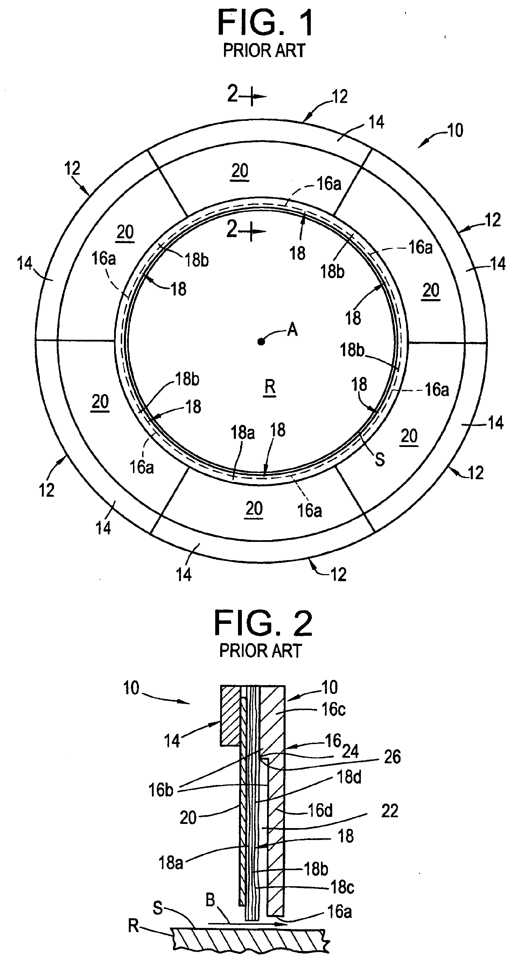

In one prior art design shown in FIGS. 1 and 2, the brush seal, generally designated 10, is formed by an annular array of like brush seal segments 12 mounted in an end-to-end fashion so as extend about and radially outwardly from a rotor R of the turbine and a central longitudinal rotational axis A thereof. Each brush seal segment 10 includes upstream and downstream plates 14, 16 and a layer of bristles 18 secured therebetween. The upstream plate 14 has a radial height substantially shorter than that of the downstream plate 16 and of the layer of bristles 18 in view that the upstream plate 14 is provided merely to assist the downstream plate 16 in the retention of the layer of bristles 18 in an annular groove or slot (not shown) in the labyrinth seal (not shown). The downstream plate 16 is a backing plate provided to prevent substantial downstream deflection of the bristles 18 under high pressure loading emanating from the direction of the fluid flow through the turbine, as shown by arrow B. The radial height of the downstream plate 16 is typically slightly less than that of the layer of bristles 18 such that an inner portion 18b of the layer of bristles 18 projects beyond an inner edge 16a of the downstream plate 16 to adjacent the surface S of the rotating rotor R of the turbine.

Each brush seal segment 12 may employ a shim plate 20 at an upstream side 18a of the layer of bristles 18 to protect them from turbulent upcoming flow. This prior art brush seal 10 also employs a pressure relief cavity 22 recessed in an upstream face 16b of the downstream plate 16 and located adjacent to a downstream side 18c of the layer of bristles 18. As a result of the provision of the cavity 22, a sharp-edged corner 24 having a generally right-angular step-like cross-sectional shape is produced on the upstream face 16b of the downstream plate 16 at a transition from a thicker outer portion 16c of the downstream plate 16 to a thinner inner portion 16d thereof which forms the cavity 22.

This particular brush seal design creates a problem in that pressure loading on the upstream side 18a of the layer of bristles 18 pushes the bristles towards the downstream plate 16 and thereby produces high concentration of stress on the rearmost bristles 18d of the layer along their line contact at 26 with the sharp-edged corner 24 of the cavity 22 on the downstream plate 16. The rear bristles 18d are thereby exposed to wear and fatigue due to the dynamic operating conditions of the turbine which may shorten their useful life.

Thus, a need exists for an innovation which will provide an effective solution to the aforementioned problem without introducing any new problems in place thereof.

EP 0 617 216 A1 and US 5,884,918 address the problem of stress concentration in the bristles.

The present invention provides a brush seal segment, for a rotary machine, with a downstream plate having a bristle fatigue reducing inclined transitional ramp designed to satisfy the aforementioned need. In the present invention, the transitional ramp provides an increased surface area of contact with the rear bristles at the transition of the upstream surface of the downstream plate into the pressure relief cavity that disperses stress on the rear bristles and rather than concentrating it along a line of contact as in the case of the sharp corner of the prior art design. As a result, a potential source of early fatigue of the rear bristles is alleviated.

In an embodiment of the present invention, a brush seal segment for a rotary machine, such as a turbine, is provided having a downstream plate and a layer of bristles abutting the downstream plate. Both the downstream plate and layer of bristles are of an arcuate configuration for extending partially about and radially outwardly from a longitudinal axis of a rotor of the rotary machine. The downstream plate has opposite upstream and downstream surfaces spaced apart from one another and facing in opposite directions extending generally parallel to the longitudinal axis of the rotor, an outer portion located remote from the rotor, an inner portion located adjacent to the rotor and defining a pressure relief cavity on the upstream surface, and a transitional ramp of a generally inclined cross-sectional shape defined on the upstream surface and extending between the outer and inner portions so as to provide a gradual transition from the outer portion into the cavity on the inner portion. The layer of bristles have opposite outer and inner portions and upstream and downstream sides and abut the upstream surface of the downstream plate at the outer portion thereof. The inclined ramp on the upstream surface of the downstream plate provides a surface area of contact with adjacent ones of the bristles that disperses stress on the bristles and thereby avoids concentration of such stress on and fatigue of the bristles along a line of contact thereon due to pressure loading on the upstream side of the bristle layer. The inclined transitional ramp has a convex cross-sectional shape or a flat cross-sectional shape.

The transitional ramp extends at an angle of from twenty to fifty degrees relative to a plane extending from the upstream surface on the outer portion the downstream plate, wherein the inner portion of the downstream plate is greater in radial height than the outer portion thereof and lesser in axial thickness between the upstream and downstream surfaces of the downstream plate than the outer portion of the downstream plate.

The invention will now be described in greater detail, by way of example, with reference to the drawings, in which:-
FIG. 1 is an end elevational view of a prior art brush seal and turbine rotor.
FIG. 2 is a cross-sectional view of the prior art brush seal and turbine rotor taken along line 2--2 of FIG. 1.
FIG. 3 is a cross-sectional view similar to that of FIG. 2 but showing the brush seal of the present invention.
FIG. 4 is an enlarged cross-sectional view of a ramp on a downstream plate of the brush seal of FIG. 3, showing the ramp having a convex cross-sectional shape.
FIG. 5 is a view similar to FIG. 4, now showing the ramp having a flat cross-sectional shape.

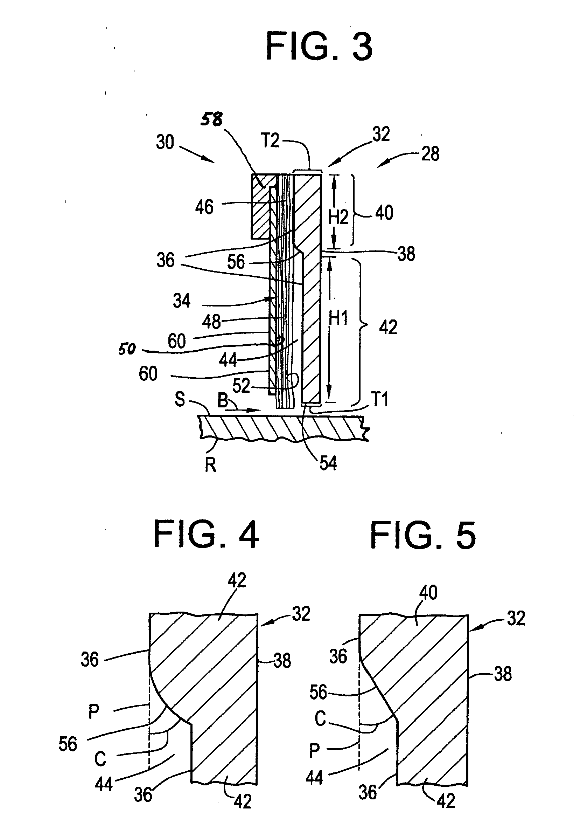

Rotary machines include, without limitation, centrifugal compressors, generators, and turbines. Turbines include, without limitation, steam turbines and gas turbines. Turbines have, without limitation, compressor sections and turbine sections. Although the invention is hereinafter described in terms relating to a turbine, it is understood that the invention is not so limited and applies to any rotary machine as will be appreciated by those skilled in the art. It is noted that Figure 3 shows only a portion of a rotary machine, such portion including, among other elements, a rotor of a turbine.

Referring now to FIG. 3 of the drawings, there is illustrated in cross-sectional form a brush seal of the present invention, generally designated 28, adapted for use in a turbine in place of the prior art brush seal 10 of FIGS. 1 and 2. The brush seal 28 is formed of an annular array of like arcuate-shaped brush seal segments 30 placed end-to-end and can be incorporated, in a well-known manner, either as a retrofit to or as original equipment in an annular slot (not shown) of a labyrinth seal (not shown).

Each brush seal segment 30 basically includes a downstream plate 32 and a layer of bristles 34 abutting the downstream plate 32. The downstream plate 32 and layer of bristles 34 have a similar arcuate configuration for extending partially about and radially outwardly from the longitudinal rotational axis A of the turbine rotor R. The downstream plate 32 has opposite upstream and downstream surfaces 36, 38 spaced apart from one another and facing in opposite directions extending generally parallel to the longitudinal axis A of the rotor R, an outer portion 40 located remote from the surface S of the rotor R, and an inner portion 42 located adjacent to the surface S of the rotor R and defining a pressure relief cavity 44 on the upstream surface 36. The inner portion 42 of the downstream plate 32 has a radial height H1 greater than a radial height H2 of the outer portion 40 and an axial thickness T1 less than an axial thickness T2 of the outer portion 40. The axial thicknesses of the outer and inner portions 40, 42 of the downstream plate 32 extend between the upstream and downstream surfaces 36, 38 thereof.

The layer of bristles 34 have opposite outer and inner portions 46, 48 and upstream and downstream sides 50, 52 and abut the upstream surface 36 of the downstream plate 32 at the outer portion 40 thereof. The layer of bristles 34 at the inner portion 48 thereof extends radially toward the surface S of the rotor R and longitudinal axis A thereof and slightly beyond an inner edge 54 of the downstream plate 32 which interconnects the upstream and downstream surfaces 36, 38 of the downstream plate 32 at the inner portion 42 thereof. The inner portion 48 of the layer of bristles 34 terminates short of contact with the rotor surface S.

Referring to FIGS. 3 to 5, the downstream plate 32 also basically includes a transitional ramp 56 having a generally inclined cross-sectional configuration and defined on the upstream surface 36 so as to extend between the outer and inner portions 40, 42 so as to provide a gradual transition from the outer portion 40 into the cavity 44 on the inner portion 42. The inclined transitional ramp 56 on the upstream surface 36 of the downstream plate 32 provides a surface area of contact with adjacent rear ones of the bristles 34 that disperses stress on the bristles 34 and thereby avoids concentration of such stress on and fatigue of the bristles 34 along a line of contact thereon, as in the case of the prior art seal 10 of FIGS. 1 and 2, due to pressure loading on the upstream side 50 of the bristle layer 34. As seen in FIG. 3 and in greater detail in FIG. 4, the inclined configuration of the transitional ramp 56 can be in a substantially convex cross-sectional shape. Alternatively, as seen in FIG. 5, the inclined configuration of the transitional ramp 56 can be in a substantially flat cross-sectional shape. The transitional ramp 56 extends at an angle C of from about twenty to fifty degrees relative to a plane P extending from the upstream surface 36 on the outer portion 40 of the downstream plate 32.

The brush seal segment 30 further preferably, although not necessarily, includes means for securing the outer portion 46 of the layer of bristles 34 on the upstream surface 36 of the outer portion 40 of the downstream plate 32. The securing means ordinarily takes the form of an upstream plate 58 having an arcuate configuration matching that of the downstream plate 32 and layer of bristles 34 for likewise extending partially about and radially outwardly from the longitudinal rotational axis A of the turbine rotor R. The upstream plate 58 abuts the outer portion 46 of the layer of bristles 34 at the upstream side 50 thereof opposite from the outer portion 40 of the downstream plate 32 such that the layer of bristles 34 at the outer portion 46 thereof is retained between the upstream and downstream plates 32, 58. Also, each brush seal segment 30 may employ a shim plate 60 at the upstream side 50 of the layer of bristles 34 to protect them from turbulent upcoming flow.

The terms "upstream" and "downstream" are employed herein refer to the positions of the features along the direction B of fluid flow direction relative to one another or to another component. For instance, the surfaces 36, 38 of the downstream plate 32 are respectively located upstream and downstream from one another along the fluid flow direction B. The plates 58 and 32 are respectively located upstream and downstream from the layer of bristles 34 along the fluid flow direction B.

For the sake of good order, various aspects of the invention are set out in the following clauses; the invention being limited by the scope of the appended claims.
1. A brush seal segment for a rotary machine, comprising:
   downstream plate of an arcuate configuration for extending partially about and radially outwardly from a longitudinal axis of a rotor of a rotary machine and having opposite upstream and downstream surfaces spaced apart from one another and facing in opposite directions extending generally parallel to the longitudinal axis of the rotor, an outer portion located remote from the rotor, an inner portion located adjacent to the rotor and defining a pressure relief cavity on said upstream surface, and a transitional ramp of a generally inclined cross-sectional shape defined on said upstream surface and extending between said outer and inner portions so as to provide a gradual transition from said outer portion into said cavity on said inner portion; and
   layer of bristles of arcuate configuration for extending partially about and radially outwardly from the longitudinal axis of the rotor and having opposite outer and inner portions and upstream and downstream sides and abutting said upstream surface of said downstream plate at said outer portion thereof, said transitional ramp on said upstream surface of said downstream plate for providing a surface area of contact with adjacent ones of said bristles of said layer thereof that disperses stress on said bristles and thereby avoids concentration of such stress on and fatigue of said bristles along a line of contact thereon due to pressure loading on said upstream side of said bristle layer.
2. The segment of clause 1 in which said transitional ramp has a substantially flat cross-sectional shape.
3. The segment of clause 1 in which said transitional ramp has a substantially convex cross-sectional shape.
4. The segment of clause 1 in which said transitional ramp extends at an angle of from twenty to fifty degrees relative to a plane extending from said upstream surface on said outer portion of said downstream plate.
5. The segment of clause 1 in which said inner portion of said downstream plate is greater in radial height than said outer portion thereof and lesser in axial thickness between said upstream and downstream surfaces of said downstream plate than said outer portion of said downstream plate.
6. The segment of clause 1 further comprising means for securing said outer portion of said layer of bristles on said upstream surface of said outer portion of said downstream plate.
7. The segment of clause 6 in which said securing means is an upstream plate of an arcuate configuration similar to that of said downstream plate for extending partially about and radially outwardly from the longitudinal axis of the rotor and abutting said outer portion of said layer of bristles at said upstream side thereof opposite from said outer portion of said downstream plate such that said layer of bristles at said outer portion thereof is retained between said upstream and downstream plates.
8. The segment of clause 1 in which said layer of bristles at an inner portion extends toward the longitudinal axis beyond said upstream plate and said inner portion of said downstream plate.
9. A brush seal for a turbine, comprising :
   an annular array of a plurality of like arcuate-shaped brush seal segments placed end-to-end for extending about and radially outwardly from a longitudinal axis of a rotor of a turbine;
   each of said brush seal segments including a downstream plate and a layer of bristles both of arcuate configurations for extending partially about and radially outwardly from the longitudinal axis of the rotor;
   said downstream plate having opposite upstream and downstream surfaces spaced apart from one another and facing in opposite directions extending generally parallel to the longitudinal axis of the rotor, an outer portion located remote from the rotor, an inner portion located adjacent to the rotor and defining a pressure relief cavity on said upstream surface, and a transitional ramp of a generally inclined cross-sectional shape defined on said upstream surface and extending between said outer and inner portions so as to provide a gradual transition from said outer portion into said cavity on said inner portion; and
   a layer of bristles of arcuate configuration for extending partially about and radially outwardly from the longitudinal axis of the rotor and having opposite outer and inner portions and upstream and downstream sides and abutting said upstream surface of said downstream plate at said outer portion thereof, said transitional ramp on said upstream surface of said downstream plate for providing a surface area of contact with adjacent ones of said bristles of said layer thereof that disperses stress on said bristles and thereby avoids concentration of such stress on and fatigue of said bristles along a line of contact thereon due to pressure loading on said upstream side of said bristle layer.
10. The seal of clause 9 in which said transitional ramp has a substantially flat cross-sectional shape.
11. The seal of clause 9 in which said transitional ramp has a substantially convex cross-sectional shape.
12. The seal of clause 9 in which said transitional ramp extends at an angle of from twenty to fifty degrees relative to a plane extending from said upstream surface on said outer portion of said downstream plate.
13. The seal of clause 9 in which said inner portion of said downstream plate is greater in radial height than said outer portion thereof and lesser in axial thickness between said upstream and downstream surfaces of said downstream plate than said outer portion of said downstream plate.
14. The seal of clause 9 further comprising means for securing said outer portion of said layer of bristles on said upstream surface of said outer portion of said downstream plate.
15. The seal of clause 14 in which said securing means is an upstream plate of an arcuate configuration similar to that of said downstream plate for extending partially about and radially outwardly from the longitudinal axis of the rotor and abutting said outer portion of said layer of bristles at said upstream side thereof opposite from said outer portion of said downstream plate such that said layer of bristles at said outer portion thereof is retained between said upstream and downstream plates.
16. The seal of clause 9 in which said layer of bristles at an inner portion extends toward the longitudinal axis beyond said upstream plate and said inner portion of said downstream plate.

## Claims

1. A brush seal segment (30) for a rotary machine, comprising:
a downstream plate (32) of an arcuate configuration for extending partially about and radially outwardly from a longitudinal axis (A) of a rotor (R) of a rotary machine and having opposite upstream and downstream surfaces (36, 38) spaced apart from one another and facing in opposite directions extending generally parallel to the longitudinal axis (A) of the rotor (R), an outer portion (40) located remote from the rotor (R), an inner portion (42) located adjacent to the rotor (R) and defining a pressure relief cavity (44) on said upstream surface (36), and a transitional ramp (56) of a generally inclined cross-sectional shape defined on said upstream surface (36) and extending between said outer and inner portions (40, 42) so as to provide a gradual transition from said outer portion (40) into said cavity (40) on said inner portion (42), said transitional ramp (56) extending at an angle (C) of from n twenty to fifty degrees relative to a plane (P) extending from said upstream surface (36) on said outer portion (40) of said downstream plate (32), wherein said inner portion (42) of said downstream plate (32) is greater in radial height than said outer portion (40) thereof and lesser in axial thickness between said upstream and downstream surfaces (36, 38) of said downstream plate (32) than said outer portion (40) of said downstream plate (32); and
a layer of bristles (34) of arcuate configuration for extending partially about and radially outwardly from the longitudinal axis (A) of the rotor (R) and having opposite outer and inner portions (46, 48) and upstream and downstream sides (50, 52) and abutting said upstream surface (36) of said downstream plate (32) at said outer portion (40) thereof, said transitional ramp (56) on said upstream surface (36) of said downstream plate (32) providing a surface area of contact with adjacent ones of said bristles (34) of said layer thereof that disperses stress on said bristles (34) and thereby avoids concentration of such stress on and fatigue of said bristles (34) along a line of contact thereon due to pressure loading on said upstrearr side (50) of said bristle layer (34), **characterised in that** said transitional ramp (56) has a substantially flat cross-sectional shape or substantially convex cross-sectional shape.

2. A brush seal (28) for a turbine, comprising: an annular array of a plurality of like arcuate-shaped brush seal segments (30) as in claim 1 placed end-to-end for extending about and radially outwardly from a longitudinal axis (A) of a rotor (R) of a turbine.

## Patentansprüche

1. Bürstendichtungssegment (30) für eine Rotationsmaschine, aufweisend:
eine stromabwärtige Platte (32) mit einer gekrümmten Konfiguration, um sich teilweise um die und von einer Längsachse (A) eines Rotors (R) einer Rotationsmaschine radial nach außen gerichtet zu erstrecken, und mit gegenüberliegenden stromaufwärtigen und stromabwärtigen Oberflächen (36, 38), die voneinander beabstandet sind und in entgegen gesetzte Richtungen weisen, die sich im Allgemeinen parallel zu der Längsachse (A) des Rotors (R) erstrecken, mit einem äußeren Abschnitt (40), der entfernt von dem Rotor (R) angeordnet ist, einem inneren Abschnitt (42), der angrenzend an den Rotor (R) angeordnet ist und einen Druckentspannungshohlraum (44) auf der stromaufwärtigen Oberfläche (36) ausbildet, und mit einer Übergangsrampe (56) mit einer im Allgemeinen geneigten Querschnittsform, die auf der stromaufwärtigen Oberfläche (36) ausgebildet ist und sich zwischen den äußeren und inneren Abschnitten (40, 42) so erstreckt, dass sie einen allmählichen Übergang von dem äußeren Abschnitt (40) in den Hohlraum (40) auf dem inneren Abschnitt (42) bereitstellt, wobei sich die Übergangsrampe (56) in einen Winkel (C) von 20 bis 50 Grad in Bezug auf eine Ebene (P) erstreckt, die sich von der stromaufwärtigen Oberfläche (36) auf dem äußeren Abschnitt (40) der stromabwärtigen Platte (32) aus erstreckt, wobei der innere Abschnitt (42) der stromabwärtigen Platte (32) in der radialen Höhe größer als deren äußerer Abschnitt (40) und in der axialen Dicke zwischen den stromaufwärtigen und stromabwärtigen Oberflächen (36, 38) der stromabwärtigen Platte (32) kleiner als der äußere Abschnitt (40) der stromabwärtigen Platte (32) ist; und
eine Schicht aus Borsten (34) mit gekrümmter Konfiguration, um sich teilweise um die und von der Längsachse (A) eines Rotors (R) einer Rotationsmaschine radial nach außen gerichtet zu erstrecken, und mit gegenüberliegenden äußeren und inneren Abschnitten (46, 48) und stromaufwärtigen und stromabwärtigen Seiten (50, 52) und an der stromaufwärtigen Oberfläche (36) der stromabwärtigen Platte (32) an deren äußerem Abschnitt (40) anliegend, wobei die Übergangsrampe (56) auf der stromaufwärtigen Oberfläche (36) der stromabwärtigen Platte (32) einen Kontaktoberflächenbereich mit benachbarten Borsten (34) ihrer Lage bereitstellt, der eine Druckspannung auf die Borsten (34) verteilt und **dadurch** eine Konzentration einer derartigen Druckspannung und eine Ermüdung der Borsten (34) entlang einer Kontaktlinie darauf aufgrund einer Druckbelastung auf der stromaufwärtigen Seite (50) der Borstenlage (34) vermeidet, **dadurch gekennzeichnet, dass** die Übergangsrampe (56) eine im Wesentlichen ebene Querschnittsform oder eine im Wesentlichen konvexe Querschnittsform aufweist.

2. Bürstendichtung (28) für eine Turbine, aufweisend: eine ringförmige Anordnung von mehreren gleich gekrümmt geformten Bürstendichtungssegmenten (30) wie in Anspruch 1, die aneinander liegend platziert sind, um sich um und radial von einer Längsachse (A) eines Rotors (R) einer Turbine nach außen gerichtet zu erstrecken.

## Revendications

1. Segment de joint à brosse (30) pour une machine tournante, comprenant :
une plaque aval (32) ayant une configuration en forme d'arc destinée à s'étendre partiellement autour d'un axe longitudinal (A) d'un rotor (R) d'une machine tournante et radialement vers l'extérieur à partir de celui-ci, et comportant des surfaces amont et aval opposées (36, 38) espacées l'une de l'autre et dirigées dans des directions opposées s'étendant globalement parallèlement à l'axe longitudinal (A) du rotor (R), une partie extérieure (40) située à distance du rotor (R), une partie intérieure (42) située au voisinage du rotor (R) et définissant une cavité de relâchement de pression (44) sur ladite surface amont (36), et une rampe de transition (56) ayant une forme de section transversale globalement inclinée définie sur ladite surface amont (36) et s'étendant entre lesdites parties extérieure et intérieure (40, 42) de façon à produire une transition graduelle à partir de ladite partie extérieure (40) dans ladite cavité (40) sur ladite partie intérieure (42), ladite rampe de transition (56) s'étendant sur un angle (C) compris entre vingt et cinquante degrés par rapport à un plan (P) s'étendant à partir de ladite surface amont (36) sur ladite partie extérieure (40) de ladite plaque aval (32), ladite partie intérieure (42) de ladite plaque aval (32) ayant une hauteur radiale supérieure à celle de ladite partie extérieure (40) de celle-ci et une épaisseur axiale inférieure, entre lesdites surfaces amont et aval (36, 38) de ladite plaque aval (32), à celle de ladite partie extérieure (40) de ladite plaque aval (32) ; et
une couche de poils (34) ayant une configuration en forme d'arc destinée à s'étendre partiellement autour de l'axe longitudinal (A) du rotor (R) et radialement vers l'extérieur à partir de celui-ci, et comportant des parties extérieure et intérieure opposées (46, 48) et des côtés amont et aval (50, 52), et butant sur ladite surface amont (36) de ladite plaque aval (32) au niveau de ladite partie extérieure (40) de celle-ci, ladite rampe de transition (56) sur ladite surface amont (36) de ladite plaque aval (32) produisant une surface de contact avec des poils adjacents parmi lesdits poils (34) de ladite couche de ceux-ci qui disperse les contraintes sur lesdits poils (34) et évite par conséquent une concentration de ces contraintes sur lesdits poils (34), et une fatigue de ceux-ci, le long d'une ligne de contact sur celle-ci du fait d'une charge de pression sur ledit côté amont (50) de ladite couche de poils (34), **caractérisé en ce que** :
ladite rampe de transition (56) a une forme de section transversale sensiblement plate ou une forme de section transversale sensiblement convexe.

2. Joint à brosse (28) pour une turbine, comprenant : un groupement annulaire d'une pluralité de segments de joint à brosse en forme d'arc identiques (30) selon la revendication 1 disposés bout à bout de façon à s'étendre autour d'un axe longitudinal (A) d'un rotor (R) d'une turbine et radialement vers l'extérieur à partir de celui-ci.
